# EUROPÄISCHE PATENTSCHRIFT

(11) **EP 1 667 075 B1**
(45) Veröffentlichungstag und Bekanntmachung des Hinweises auf die Patenterteilung: **20.11.2019**
(21) Anmeldenummer: 05026298.9
(22) Anmeldetag: 02.12.2005
(51) Int. Cl.: G07F 7/08, G07B 15/02, G07F 7/00

(54) **Verfahren zur Kontrolle von auf Nutzerendgeräten gespeicherten elektronischen Fahrkarten**
Method to control electronic tickets saved on end-devices of the users
Méthode pour controller les billets électroniques enregistrées sur les terminaux de les usagers

(30) Priorität: 02.12.2004 EP 04028569; 02.12.2004 DE 102004058273; 16.12.2004 DE 102004061180
(43) Veröffentlichungstag der Anmeldung: 07.06.2006
(60) Teilanmeldung: 19155250.4
(73) Patentinhaber: mcity GmbH, 41238 Mönchengladbach (DE)
(72) Erfinder: Stoffelsma, Bouke, 41239 Mönchengladbach (DE); Feiter, Manfred, 41238 Mönchengladbach (DE)
(74) Vertreter: Rausch Wanischeck-Bergmann Brinkmann

(56) Entgegenhaltungen:
- EP-A- 1 304 670
- EP-A- 1 333 406
- WO-A-01/03075
- WO-A-01/69540
- WO-A-02/056237
- WO-A-02/077923
- US-A1- 2003 164 399

## Beschreibung

Die vorliegende Erfindung betrifft ein Verfahren zur Kontrolle von Nutzerendgeräten zugeordneten elektronischen Fahrkarten, insbesondere von elektronischen Fahrkarten, die vorzugsweise innerhalb eines Systems zur automatischen Erfassung der Benutzung kostenpflichtiger Transportmittel zur Personenbeförderung und/oder zur Abrechnung des Fahrpreises verwendet werden.

Der Begriff "Fahrkarte" umfasst nachfolgend als Oberbegriff Fahrberechtigungen aller Art, wie beispielsweise Kurzstrecken-, Einzelfahrt-, Tages-, Monats-, Jahresfahrscheine oder dergleichen, Ermäßigungsberechtigungen aller Art, wie beispielsweise Kinder-, Gruppen-, Behindertenermäßigungen oder dergleichen, Zuschläge aller Art, wie beispielsweise eine Fahrt erster Klasse, die Mitnahme eines Haustieres oder dergleichen, etc.

Bislang wurde die Benutzung kostenpflichtiger Transportmittel, insbesondere des öffentlichen Personenverkehrs, überwiegend in Form von auf Papier gedruckten Fahrkarten abgewickelt. Zur Kontrolle solcher Fahrkarten werden diese vom Nutzer einem Kontrolleur vorgezeigt, der durch bloßes Ansehen der Fahrkarte prüfen kann, ob sie für die befahrene Wegstrecke Gültigkeit besitzt.

Da auf Papier gedruckte Fahrkarten relativ umständlich zu handhaben und relativ einfach zu fälschen sind, gibt es im Stand der Technik seit mehreren Jahren unterschiedliche Ansätze, den Fahrschein aus Papier durch eine sogenannte "elektronische Fahrkarte" zu ersetzen, also durch eine auf einem Speichermedium gespeicherte Fahrkarte. Diese Ansätze ermöglichen eine automatische Ermittlung und Abrechnung des Fahrpreises, wobei nachfolgend einige Beispiele ausgeführt werden:
Aus der PCT-Anmeldung NL01/00215 ist beispielsweise ein Verfahren bekannt, bei dem der Fahrgast ein mobiles Gerät (z. B. ein Mobiltelefon oder einen Transponder) mit einer diesem zugeordneten Nummer benutzt, um automatisch identifiziert zu werden, wenn er sich in einem Transportmittel des öffentlichen Nahverkehrs aufhält. Das Fahrzeug registriert, wo der Fahrgast das Fahrzeug betritt, und wo er das Fahrzeug verlässt. In der Regel werden diese Daten an ein Hintergrundsystem übermittelt, das auf Basis dieser Daten den Fahrpreis für die zurückgelegte Strecke ermittelt. Solche Systeme werden oft als "Be-In/Be-Out"-Systeme bezeichnet.

Aus der DE 199 57 660 ist ein Verfahren zur Abrechnung des Fahrpreises bei der Benutzung öffentlicher Verkehrsmittel bekannt, bei dem ein vom Nutzer mitgeführter scheckkartenähnlicher Speicher mit einem Guthaben belegt ist. Während der Nutzung öffentlicher Verkehrsmittel werden von dem Verkehrsmittel Zählimpulse ausgesandt und bei jedem empfangenen Zählimpuls von dem auf der Speichereinheit gespeicherten Guthaben ein Betrag abgebucht.

Aus der Schweiz ist ein Pilotprojekt "easyride" bekannt, bei dem der Nutzer eine Transponder-Karte bei sich führt, die beim Benutzen eines Transportmittels eine Anmeldung im Fahrzeug vornimmt und dies regelmäßig wiederholt.

Um bei den zuvor beschriebenen automatischen Erfassungs- und Abrechnungsverfahren gleich welcher Art die einem Nutzerendgerät zugeordnete elektronische Fahrkarte kontrollieren zu können, wurden spezielle Kontrollgeräte entwickelt, die von den Kontrolleuren mitgeführt werden. Diese Kontrollgeräte sind dazu geeignet, elektronische Fahrkarten kontaktbehaftet oder kontaktlos von den entsprechenden Nutzerendgeräten auszulesen, um deren Gültigkeit überprüfen zu können. Nachteilig hieran ist, dass die Kontrolle aufgrund des Auslesevorgangs normalerweise länger als bei Papierfahrscheinen dauert.

Es ist daher eine Aufgabe der vorliegenden Erfindung, ein Verfahren anzugeben, dass eine schnelle und einfache Kontrolle der Fahrkartengültigkeit einer einem Nutzerendgerät zugeordneten elektronischen Fahrkarte ermöglicht.

Diese Aufgabe wird gemäß der vorliegenden Erfindung durch ein Verfahren nach Anspruch 1 **gelöst**. Die abhängigen Ansprüche beziehen sich auf individuelle Ausgestaltungen der vorliegenden Erfindung.

Mit dem erfindungsgemäßen Verfahren können elektronische Fahrkarten kontrolliert werden. Bei den Nutzerendgeräten kann es sich grundsätzlich um beliebige Endgeräte handeln, die derart eingerichtet sind, dass diesen eine elektronische Fahrkarte zugeordnet werden kann und dass sie zumindest Signale empfangen können, wie beispielsweise entsprechend eingerichtete Transponderkarten, Mobiltelefone, Handhelds oder dergleichen. Die genaue Art und Weise der Fahrpreisermittlung und -abrechnung ist in Bezug auf das erfindungsgemäße Verfahren von sekundärer Bedeutung und soll daher nachfolgend nicht näher erläutert werden. Es sei aber darauf hingewiesen, dass grundsätzlich jedes Fahrpreisermittlungs- und Abrechnungsverfahren verwendet werden kann, wie beispielsweise eines der eingangs beschriebenen Verfahren.

Zur Kontrolle der den Nutzerendgeräten zugeordneten elektronischen Fahrkarten wird erfindungsgemäß ein Kontrolldatentelegramm/-code ausgesendet, wobei Nutzerendgeräte, die das Kontrolldatentelegramm empfangen, automatisch die Gültigkeit der elektronischen Fahrkarte repräsentierende Signale optisch ausgeben, wobei diese Gültigkeitssignale im Kontrolldatentelegramm enthalten sind. Diese Gültigkeitssignale können dann von einem Kontrolleur in einer einfachen Art und Weise überprüft werden. Das Endgerät weist ein Display auf, somit kann es sich bei dem die Gültigkeit der elektronischen Fahrkarte repräsentierenden Signal um ein optisches Gültigkeitssignal handeln, insbesondere um einen Gültigkeitscode, wie beispielsweise einen Zahlencode, Symbolcode, Farbcode oder dergleichen, das dem Kontrolleur bekannt ist und das er durch einfache Sichtprüfung auf seine Richtigkeit überprüfen kann, und zwar ohne dass dafür ein separates Kontrollgerät erforderlich ist. Dieser Gültigkeitscode wird vorteilhaft regelmäßig geändert, so dass eine Manipulation des erfindungsgemäßen Kontrollverfahrens erschwert wird. Ferner kann der Gültigkeitscode auch eine Zeitangabe mit oder ohne Datum enthalten. Auf diese Weise kann vermieden werden, dass Gültigkeitscodes aufgezeichnet und erneut gesendet werden können. Zum Vergleich der Zeitangabe kann eine im Nutzerendgerät integrierte Verarbeitungseinheit eine Zeitmessung vornehmen, die sich über die im Kontrolldatentelegramm enthaltene Zeitangaben justiert. Statt oder zusätzlich zu einer Zeitangabe kann auch eine laufende Nummer enthalten sein, die ebenfalls ermöglicht, bereits empfangene Gültigkeitscodes mit niedrigeren Nummern von der Verarbeitung auszuschließen.

Weist das Nutzerendgerät beispielsweise kein Display auf, so kann auch ein akustisches Gültigkeitssignal von dem Nutzerendgerät ausgegeben werden, wie beispielsweise eine dem Kontrolleur bekannte spezielle Tonfolge, die ebenfalls regelmäßig variiert werden kann, um einer Umgehung desKontrollsystems vorzubeugen, wobei das akustische Gültigkeitssignal bevorzugt mit dem Kontrolldatentelegramm an das Nutzerendgerät übermittelt wird. Auch hier ist kein separates Kontrollgerät erforderlich.

Alternativ kann das mit dem Kontrolldatentelegramm empfangene Gültigkeitssignal auch von dem Endgerät an ein vom Kontrolleur mitgeführtes Kontrollgerät gesendet werden. Bei dieser Variante muss das Nutzerendgerät allerdings ferner dazu geeignet sein, Signale bzw. Daten auszusenden.

Nutzerendgeräte, die zum Zeitpunkt des Aussendens des Kontrolldatentelegramms nicht eingeschaltet sind, empfangen diese hingegen nicht, so dass die die Gültigkeit der elektronischen Fahrkarte repräsentierenden Signale von solchen Nutzerendgeräten nicht ausgegeben werden können. Gibt ein Nutzerendgerät also kein die Gültigkeit der elektronischen Fahrkarte repräsentierendes Signal aus, so kann zunächst davon ausgegangen werden, dass der entsprechende Nutzer das Transportmittel ohne gültigen Fahrschein nutzt.

Die ausgesendeten Kontrolldatentelegramme werden alternativ zudem nur an solche Nutzerendgeräte gesendet, die zuvor bereits abrechnungsrelevante Signale empfangen und/oder gesendet haben. Es soll also sichergestellt werden, dass nur diejenigen Nutzerendgeräte die Kontrolldatentelegramme empfangen, bei denen die Fahrpreisermittlung und/oder die Fahrpreisabrechnung bereits eingesetzt hat. Schaltet beispielsweise ein Nutzer sein Nutzerendgerät erst dann ein, wenn er bemerkt, dass soeben ein Kontrolleur zugestiegen ist, so wird sein Nutzerendgerät selbst dann kein die Gültigkeit der elektronischen Fahrkarte repräsentierendes Signal ausgeben, wenn das Nutzerendgerät vor der Aussendung des Kontrolldatentelegramms eingeschaltet wurde, da das Nutzerendgerät bislang noch keine abrechnungsrelevanten Signale empfangen und/oder gesendet hat. Ein bewußtes Hintergehen des Kontrollverfahrens wird entsprechend erschwert.

Erfindungsgemäß werden die Kontrolldatentelegramme an alle Nutzerendgeräte ausgesendet, wobei aber nur diejenigen Nutzerendgeräte ein die Gültigkeit der elektronischen Fahrkarte repräsentierendes Signal ausgeben, die zuvor bereits abrechnungsrelevante Signale empfangen und/oder gesendet haben. Hier entscheidet also das Nutzerendgerät darüber, ob es ein Gültigkeitssignal ausgibt oder nicht.

Die Kontrolldatentelegramme werden bevorzugt beim Eintreffen vorbestimmter Ereignisse und/oder in vorbestimmten zeitlichen Abständen ausgesendet. Beispielsweise können Kontrolldatentelegramme an jeder Haltestelle bzw. kurz vor oder kurz nach jeder Haltestelle ausgesendet werden, so dass das Nutzerendgerät stets die Gültigkeit der auf den Nutzerendgerät gespeicherten elektronische Fahrkarte für den entsprechenden Streckenabschnitt anzeigt, die dann sowohl vom Nutzer selbst als auch von einem Kontrolleur überprüft werden kann. Alternativ können Kontrolldatentelegramme auch nur dann ausgesendet werden, wenn tatsächlich eine Kontrolle durch einen Kontrolleur durchgeführt werden soll.

Sollten seitens des Kontrolleurs an der Echtheit eines von einem Nutzerendgerät ausgegebenen Gültigkeitssignals Zweifel bestehen, so kann dieses unter Zuhilfenahme eines entsprechenden Prüfgeräts, dass vom Kontrolleur mitgeführt wird, bevorzugt einer genauen Prüfung unterzogen werden, indem beispielsweise die auf dem Nutzerendgerät gespeicherten abrechnungsrelevanten Daten ausgelesen und überprüft werden.

Nachfolgend wird das erfindungsgemäße Verfahren zur Kontrolle von auf Nutzerendgeräten gespeicherten elektronischen Fahrkarten anhand einer beispielhaften Ausführungsform erläutert.

Bei einer Ausführungsform des erfindungsgemäßen Verfahrens wird zur Ermittlung und Abrechnung des Fahrpreises ein Be-In/Be-Out-System verwendet, bei dem eingeschaltete, sich innerhalb der Sendereichweite eines in einem Transportmittel angeordneten Senders befindende Nutzerendgeräte in vorbestimmten Zeitabständen von dem Sender ausgesendete, abrechnungsrelevante Daten empfangen, auf denen basierend auf den entsprechenden Endgeräten gespeicherte Guthaben, die als elektronische Fahrkarte dienen, nach und nach in Abhängigkeit von der zurückgelegten Fahrtstrecken reduziert werden.

Soll nun eine Fahrkartenkontrolle durchgeführt werden, so wird von einer entsprechenden Vorrichtung, die innerhalb des Transportmittels angeordnet oder vom Kontrolleur mitgeführt wird, ein Kontrolldatentelegramm ausgesendet, das von den innerhalb des Transportmittels vorhandenen eingeschalteten Nutzerendgeräten empfangen wird. Der dem Kontrolldatentelegramm beigefügte Gültigkeitscode wird automatisch auf den Displayeinrichtungen der Nutzerendgeräte angezeigt und kann in einfacher Art und Weise vom Kontrolleur verifiziert werden.

Allerdings wird der Gültigkeitscode nur dann auf dem Display eines Nutzerendgerätes angezeigt, wenn das Endgerät bereits zuvor abrechnungsrelevante Daten von dem innerhalb des Transportmittels angeordneten Senders empfangen hat. Auf diese Weise soll die Möglichkeit ausgeschlossen werden, dass ein Nutzer sein Nutzerendgerät erst dann einschaltet, wenn er den Verdacht hat, dass soeben ein Kontrolleur zugestiegen ist, aber gerade noch rechtzeitig, so dass sein Nutzerendgerät das Kontrolldatentelegramm empfängt und auf dem Display der Gültigkeitscode erscheint.

Ferner sollte klar sein, dass die zuvor beschriebene Ausführungsform nur als Beispiele dienen und in keiner Weise einschränkend sind. Vielmehr sind Modifikationen und Änderungen möglich, ohne den Schutzbereich der vorliegenden Erfindung zu verlassen, der durch die beiliegenden Ansprüche definiert ist.

## Patentansprüche

1. Verfahren zur Kontrolle von Nutzerendgeräten zugeordneten elektronischen Fahrkarten, die innerhalb eines Systems zur automatischen Erfassung der Benutzung kostenpflichtiger Transportmittel zur Personenbeförderung und/oder zur Abrechnung des Fahrpreises verwendet werden,
wobei eingeschaltete, sich innerhalb der Senderreichweite eines in einem Transportmittel angeordneten Senders befindende Nutzerendgeräte von dem Sender ausgesendete abrechnungsrelevante Daten empfangen, auf denen basierend der Fahrpreis ermittelt und abgerechnet wird,
wobei die Nutzerendgeräte aufgrund des Empfanges eines Kontrolldatentelegrammes die Gültigkeit der elektronischen Fahrkarte repräsentierende Signale optisch ausgeben,
wobei das Kontrolldatentelegramm von einer Vorrichtung, die innerhalb des Transportmittels angeordnet ist, an alle Nutzerendgeräte ausgesendet wird, und wobei zusammen mit dem Kontrolldatentelegramm ein Gültigkeitscode übermittelt wird, der nur dann automatisch über ein Display der jeweiligen Nutzerendgeräte ausgegeben wird, wenn das Nutzerendgerät bereits zuvor abrechnungsrelevante Daten von dem innerhalb des Transportmittels angeordneten Sender empfangen hat.

2. Verfahren nach Anspruch 1, bei dem Kontrolldatentelegramme beim Eintreffen vorbestimmter Ereignisse und/oder in vorbestimmten zeitlichen Abständen ausgesendet werden.

3. Verfahren nach Anspruch 1, wobei der Gültigkeitscode variiert wird.

## Claims

1. A method for controlling electronic tickets assigned to user terminals, which tickets will be used within a system for automatically detecting the use of fee-based transport means for the passenger transport and/or for billing the fare,
wherein user terminals, that are switched on and are located within a transmitter range of a transmitter placed in a transport means, receive data which are relevant to the billing and are emitted by the transmitter, and on the base of which the fare will be determined and billed,
wherein as a result of receiving a control data telegram the user terminals will optically emit signals that represent the validity of the electronic ticket,
wherein the control data telegram will be sent out to all user terminals by a device which is arranged inside the transport means, and wherein a validity code will be transmitted together with the control data telegram, which validity code will only be automatically output via a display of the respective user terminals, if the user terminal has already received before data that are relevant to the billing by the transmitter placed inside the transport means.

2. A method according to claim 1, in which control data telegrams will be sent out if predetermined events occur and/or in predetermined time intervals.

3. A method according to claim 1, wherein the validity code will be varied.

## Revendications

1. Procédé de contrôle de billets électroniques attribués à des terminaux d'utilisateur, lesquels billets électroniques sont utilisés à l'intérieur d'un système de détection automatique de l'utilisation de moyens de transport payants destinés au transport de personnes et/ou de facturation du prix du trajet.
dans lequel des terminaux d'utilisateur, qui sont allumés et qui se trouvent dans la zone de portée de l'émetteur d'un émetteur disposé dans un moyen de transport, reçoivent des données pertinentes pour la facturation et émises par l'émetteur, sur la base desquelles le prix du trajet est déterminé et facturé,
dans lequel suite à la réception d'un télégramme de données de contrôle les terminaux d'utilisateur émettent de manière optique des signaux représentant la validité du billet électronique,
dans lequel le télégramme de données de contrôle est émis par un dispositif, qui est disposé à l'intérieur du moyen de transport, à tous les terminaux d'utilisateur, et dans lequel un code de validité est transmis ensemble avec le télégramme de données de contrôle, lequel code de validité n'est émis via un écran des terminaux d'utilisateur respectifs que si le terminal d'utilisateur a déjà reçu avant des données pertinentes pour la facturation par l'émetteur disposé à l'intérieur du moyen de transport.

2. Procédé selon la revendication 1, dans lequel des télégrammes de données de contrôle sont émis, si des événements prédéterminés surviennent et/ou dans des intervalles de temps prédéterminés.

3. Procédé selon la revendication 1, dans lequel le code de validité est varié.
